# FASCICULE DE BREVET EUROPEEN

(11) **EP 4 154 227 B1**
(45) Date de publication et mention de la délivrance du brevet: **25.02.2026**
(21) Numéro de dépôt: 21733849.0
(22) Date de dépôt: 20.05.2021
(51) Int. Cl.: E05B 47/00, G07C 9/00, E05B 17/18, H04N 7/18

(54) **SYSTÈME DE SERRURE CONNECTÉE**
ANGESCHLOSSENES VERRIEGELUNGSSYSTEM
CONNECTED LOCK SYSTEM

(30) Priorité: 20.05.2020 FR 2005372
(43) Date de publication de la demande: 29.03.2023
(73) Titulaire: Frigg Home SLLC, Blagoevgrad 2700 (BG)
(72) Inventeur: GAUBERT, Bernard, 40140 Soustons (FR)
(74) Mandataire: Yes My Patent
(86) Numéro de dépôt international: PCT/FR2021/050909
(87) Numéro de publication internationale: WO 2021/234307

(56) Documents cités:
- EP-A1- 3 366 872
- EP-A1- 3 505 710
- WO-A1-2016/085529
- WO-A1-2017/117137
- WO-A1-2018/129915
- CN-A- 105 100 187
- CN-A- 108 979 338
- CN-A- 110 533 807
- FR-A1- 3 048 714
- FR-A1- 3 049 635
- US-A1- 2014 265 359
- US-A1- 2019 178 003

## Description

L'invention se rapporte au domaine des systèmes de serrures connectées pour des portes, en particulier pour une porte d'entrée d'une habitation (maison, appartement...etc) ou autres bâtiments ou constructions similaires.

Dans ce domaine, il est connu de proposer des serrures connectées couvrant le verrou uniquement et pouvant être activées par un code numérique ou une application téléphonique.

Malheureusement, les serrures connectées classiques de l'art antérieur ne sont pas pleinement satisfaisantes en cas de décharge de batterie pour éviter un blocage du verrou.

En outre, les serrures connectées de l'art antérieur ne permettent pas de savoir en détail quelle personne utilise effectivement le moyen d'accès.

De plus, les moyens de déverrouillage de la serrure connectée ont des failles en termes de piratage, de sorte qu'un tiers peut pirater la connexion internet ou le signal de déverrouillage et avoir accès aux contrôles de la serrure.

US2014265359 décrit un système de serrure connecté pour porte, comprenant un boîtier et communiquant avec une application de gestion d'accès. Cependant, le boîtier comprend peu de fonctionnalités de communication.

US2019178003 décrit un autre système de serrure connecté pour porte, comprenant un boîtier et communiquant avec une application de gestion d'accès. Le boîtier présente une forme cylindrique et une grande compacité, qui limite le nombre de fonctions pouvant être intégrées au système de serrure.

WO2016085529, WO2017117137 et CN105100187 décrivent d'autres exemples de systèmes de serrure connectés.

Ainsi, un premier objectif de l'invention est de proposer un système de serrure connectée ayant des moyens permettant d'éviter le blocage du verrou en cas de décharge de la batterie du système.

Un deuxième objectif est de proposer un système de serrure connectée permettant de savoir qui utilise effectivement le moyen d'accès.

Un troisième objectif est de proposer un système de serrure connectée davantage sécurisé vis-à-vis du piratage des moyens d'accès.

Pour atteindre ces objectifs, l'invention propose un système de serrure connectée pour porte, ledit système étant configuré sous forme de boîtier, ledit boîtier comprenant au moins :
- un moyen de déverrouillage sécurisé apte à être connecté à un verrou de porte,
- une caméra configurée pour interagir avec un utilisateur ;
- un détecteur connecté à la caméra et configuré pour détecter une présence ;
- un module de connexion à une application de gestion d'accès ;
- un module de communication comprenant microphone et un haut-parleur configuré pour interagir avec l'utilisateur,
caractérisé en ce que le système de serrure et l'application mobile sont connectés via un réseau Blockchain ou via le réseau Holochain.

Selon un aspect, le système comprend une clé de secours physique et une serrure de secours sur le boîtier, pour déverrouiller le verrou de l'extérieur avec la clé de secours. Avantageusement, cela permet de pouvoir ouvrir le verrou de l'extérieur même si l'électronique du système n'est pas fonctionnelle.

Selon un autre aspect, le système comprend, côté extérieur, un port USB de recharge du système, de préférence derrière un volet de masquage. Avantageusement, cela permet de pouvoir recharger le système de l'extérieur, et ne pas être bloqué par le verrou.

Selon un autre aspect, au moins un moyen de déverrouillage sécurisé comprend un contrôle de déverrouillage du verrou pilotable par un ou plusieurs protocoles de communication IoT choisis parmi le NB-IoT, Lifi, UNB (Ultra narrow Band), un protocole mixte double fréquence (twin band). Avantageusement, ces protocoles permettent un déverrouillage à distance, et sont pour l'heure sensiblement inviolables. En outre, ils consomment peu d'énergie électrique.

Selon d'autres aspects pris isolément, ou combinés selon toutes les combinaisons techniquement réalisables :
- le boîtier s'étend sous forme de cadre autour du verrou et d'une poignée de porte associée ; et/ou
- le boîtier présente un profil plan apte à être installé contre une face extérieure de la porte ; et/ou
- le détecteur est configuré pour déclencher le fonctionnement de la caméra en cas de détection d'une présence ; et/ou
- le système comprend un volet de masquage amovible masquant la serrure de secours ; et/ou
- le moyen de déverrouillage sécurisé comprend un lecteur d'empreinte ; et/ou
- le moyen de déverrouillage sécurisé comprend un clavier numérique ; et/ou
- le moyen de déverrouillage sécurisé comprend un module de déverrouillage par badge ; et/ou
- le système est alimenté par une batterie lithium-ion rechargeable par résonance magnétique ; et/ou
- le module de connexion est configuré pour être connecté à l'application de gestion d'accès via un serveur, lequel intègre le programme de fonctionnement du système de serrure ; et/ou
- le système comprend un module de sécurité anti-arrachage, configuré pour notifier une alerte via l'application de gestion d'accès ; et/ou
- le système comprend un module de sécurité anti-intrusion, configuré pour notifier une alerte via l'application de gestion d'accès.

Un autre objet de l'invention concerne un kit de serrure connectée comprenant :
- un système de serrure connectée selon l'invention
- un serveur connecté au système de serrure via un protocole de communication sans fil,
- une application de gestion d'accès configurée pour piloter le système de serrure via le serveur.

L'invention concerne également un procédé de mise en œuvre d'un système de serrure connectée. Le procédé comprend les étapes suivantes :
a) installer le système de serrure sur un verrou de porte ;
b) connecter le système de serrure à un serveur via un protocole de communication sans fil;
c) connecter une application de gestion d'accès au système de serrure via le serveur.

Selon un mode de réalisation particulier, le système de serrure et l'application mobile sont connectés via un réseau Blockchain ou Holochain.

L'invention concerne également un ensemble de serrures connectées, comprenant plusieurs systèmes de serrure tel que décrits ci-dessus, chaque système de serrure étant connecté à un réseau Blockchain ou réseau Holochain. Chaque système de serrure 1 connectée constitue un point relais du réseau.

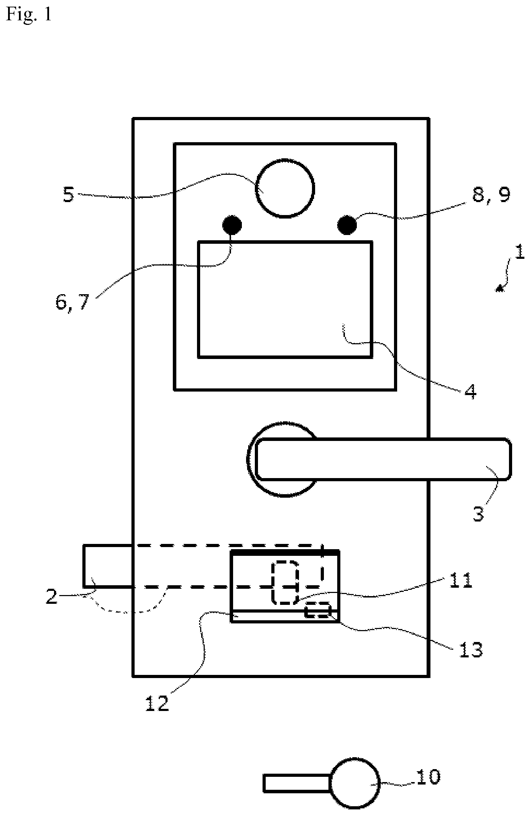

L'invention sera davantage détaillée par la description de modes de réalisation non-limitatifs, et sur la base de la figure annexée [Fig.1] illustrant une vue en plan de l'extérieur d'un système de serrure connectée selon un mode de réalisation préféré de l'invention.

L'invention concerne un système de serrure connectée 1, en particulier pour une porte de bâtiment, habitation ou autre construction similaire, plus particulièrement une porte d'entrée.

Le système de serrure connectée 1 est réalisé sous forme de boîtier. En particulier, le boîtier s'étend sous forme de cadre autour d'un verrou 2 et d'une poignée de porte 3 associée. Avantageusement, le boîtier peut être conformé en bloc rigide difficile à forcer. De préférence, le boîtier présente un profil plan apte à être installé contre une face extérieure de la porte.

Le système de serrure 1 comprend en outre des moyens de déverrouillage sécurisé connectés mécaniquement au verrou de porte 2. Il s'agit d'un moyen de contrôle d'accès pour actionner le verrou 2.

En particulier, les moyens de déverrouillage sécurisé peuvent comprendre un lecteur d'empreinte 4 et/ou un clavier numérique 5. Ainsi, le déverrouillage peut être réalisé par un code numérique via le clavier 5 du système de serrure 1, ou via une lecture d'une empreinte digitale sur le lecteur 4.

D'autres moyens de déverrouillage peuvent être envisagés. De préférence, ces moyens peuvent aussi être utilisés pour le verrouillage.

Dans une variante préférée, le système de serrure 1 est configuré de sorte que son verrouillage peut être réalisé en levant la poignée 3 vers le haut. Le déverrouillage du système de serrure 1 de l'intérieur peut se faire fera via un bouton installé sur la platine du système de serrure 1 électriquement ou mécaniquement.

Le système de serrure 1 comprend un module de connexion à une application de gestion d'accès. Il s'agit d'une application web ou d'une application mobile chargeable dans un appareil du gestionnaire d'accès, c'est à dire le propriétaire du système 1 ou un opérateur, situés à distance.

L'application de gestion d'accès peut être installée sur un ou plusieurs appareils du propriétaire du système 1, tels que smartphone, montre, tablette, ordinateur, etc. L'application peut être utilisée pour verrouiller ou déverrouiller le système de serrure 1 à distance.

Le module de connexion se connecte à l'application via un protocole de communication sans fil, par exemple en WIFI ou par un module de données mobiles. Ce module peut intégrer des composants matériels à cet effet. Avantageusement, la connexion en données mobiles (3G, 4G, 5G...) permet de pouvoir maintenir une connexion même en cas de coupure d'internet domestique (WIFI).

Le protocole de communication peut être sélectionné via l'application mobile automatiquement.

Selon un mode de réalisation préféré, le système de serrure 1 est couplé à un serveur. Tous deux sont commandés par l'application de gestion d'accès installée sur un ou plusieurs appareils du gestionnaire du système 1, tels que smartphone, montre, tablette, ordinateur, etc.

Le programme de fonctionnement du système de serrure 1, constituant son « cerveau », se trouve sur le serveur. Le principe de fonctionnement est comparable à un système d'alarme, comme la relation entre un détecteur d'intrusion et la centrale d'alarme.

Le système de serrure 1 est connecté au serveur via un protocole de communication sans fil, tel que le protocole WIFI. Le serveur transmet via le réseau installé les informations du système de serrure 1, sur l'application de gestion.

L'application passe obligatoirement par le serveur pour communiquer avec le système de serrure 1, c'est la même procédure dans l'autre sens. Cela enlève toutes contraintes distancielles ou de performances dans la communication entre la serrure et l'application.

L'installation (serrure, serveur, application) peut fonctionner sur un réseau décentralisé de type Blockchain (tels que Filecoin, Storj, Sia, MaidSafe) ou Holochain, qui est une nouvelle technologie permettant d'aller vers un Internet réellement décentralisé et ultra performant, différent de l'internet (http) comme on le connaît ou de la Blockchain. Le réseau Holochain a l'avantage d'être moins énergivore et plus sécurisé.

L'invention peut présenter deux applications bien distinctes :
- La première spécifique au fonctionnement de la serrure pour les particuliers.
- La deuxième uniquement réservée à certains secteurs professionnels, tel que la poste ou autres services de livraison, services de secours (pompiers, samu...etc), forces de l'ordre (gendarmerie, police....) certains services d'aide à domicile (aide à la personne...). Chaque secteur professionnel aura, au niveau de l'application de gestion, les spécificités liées à son cœur de métier. Le tout sera réalisé dans le respect des normes défini par les autorités compétentes, comme la CNIL pour la France. Cette application d'accès, pour des raisons de sécurité, ne se trouvera pas en téléchargement sur le web (http).

Selon un aspect de l'invention, les moyens de déverrouillage sécurisé peuvent comprendre un contrôle de déverrouillage du verrou pilotable par un ou plusieurs protocoles de communication IoT choisis parmi le M2M (machine to machine), NB-IoT, Lifi, UNB (Ultra narrow Band), un protocole mixte double fréquence (twin band). Ainsi, la commande de déverrouillage est acheminée vers le système par un ou plusieurs de ces protocoles. Des composants nécessaires sont prévus dans le boîtier à cet effet. Avantageusement, ces protocoles permettent un déverrouillage à distance, et sont pour l'heure sensiblement inviolable. Le twin band est une mesure de sécurité supplémentaire dans son mode communication. Selon un éventuel embouteillage d'une fréquence, il permettra à l'autre fréquence de donner l'information plus rapidement.

En outre, la technologie UNB (Ultra Narrow Band) utilise des bandes de fréquences (onde radio) libres de droit disponibles dans le monde entier comme les bande ISM (bande industrielle, scientifique et médical) pour exemple en Europe il s'agit de l'ISL à 868 Mhz. Cette fréquence est radio ultra rapide et de longue portée.

Le système de serrure 1 selon une variante est équipé de cette technologie en mode protocole Mixte double fréquence 433Mhz / 868Mhz / 902Mhz ou twin band. Cette variante est très sécurisante et performante en cas d'encombrement des canaux. Par ailleurs, cette technologie installée sur le système de serrure 1 lui permettra d'être toujours fonctionnel en cas de coupure électrique, d'internet...etc.

Le protocole de communication peut être choisi en fonction du lieu géographique où est installé le système de serrure 1.

Les moyens de déverrouillage sécurisé peuvent en outre comprendre un module de déverrouillage par badge. Ainsi, un lecteur de badge (non-représenté) peut être prévu sur le boîtier à cet effet.

De préférence, le système de serrure 1 pourra être connecté à plusieurs appareils au sein d'un même réseau domestique, voire tous, en utilisant le même protocole de transmission par onde radio.

De préférence, l'application comprend une fonction indiquant le niveau de charge des piles (batteries) du système de serrure 1.

Dans une variante, par sécurité dans le cas où les piles (batteries) ont une charge faible et que la serrure est sur position déverrouillée, alors la serrure se verrouille automatiquement.

En cas de verrouillage, pour déverrouiller le système de serrure 1, plusieurs options sont possibles : charger les batteries/changer les piles de l'intérieur, déverrouiller mécaniquement depuis l'intérieur ou via une clé de secours, comme détaillé plus bas.

Selon une variante, le système de serrure 1 peut être alimenté par une batterie lithium-ion rechargeable par résonance magnétique.

Le dispositif de recharge par résonance magnétique comprend un émetteur et un récepteur (soit un élément connecté à la batterie à charger, soit la batterie elle-même).

Par exemple, l'émetteur peut être installé sur une face intérieure de la porte et le récepteur dans le boîtier du système de serrure 1 connectée, du coté de la porte plutôt que vers l'extérieur, pour réduire la distance entre l'émetteur et le récepteur.

En alternative, l'émetteur peut être installé dans le serveur, qui peut être placé à plusieurs mètres du système de serrure 1.

D'autres agencements de l'émetteur et du récepteur sont possibles dans sortir du cadre de l'invention.

De préférence, un contrôleur de charge est intégré au système de serrure 1 pour surveiller en permanence l'état de charge de la batterie. Le contrôleur a une fonction de régulation, consistant à assurer la charge complète de la batterie et prévenir de tout risque de surcharge de la batterie en stoppant son alimentation lorsqu'elle atteint un niveau de charge prédéterminé. Le contrôleur coupe l'alimentation du générateur lorsque l'état de charge de la batterie atteint l'une des valeurs limites correspondant au déclenchement de la sécurité. Cette surveillance et cette protection permanente permettent ainsi de prolonger de façon importante les performances et la durée de vie de la batterie.

La résonance magnétique permet le chargement de la batterie à des distances importantes. Cette technique repose sur une bobine et un condensateur qui fait office de résonateur. L'énergie électrique est transmise par résonance électromagnétique entre la bobine de l'émetteur et celle du récepteur. Ce procédé s'accommode ainsi de plus grandes distances de charge. Le couplage magnétique entre les deux bobines peut en effet être faible, à condition que les fréquences de résonance se correspondent entre les deux bobines. Cette technique donne donc plus de souplesse quant à la disposition entre l'émetteur et le récepteur.

En terme de fréquences, les ondes électromagnétiques (WPT : Wireless Power Transfer en anglais) seront dans des bandes de fréquences inférieures à 30 MHz.

Selon un aspect, outre le contrôle d'accès, le système de serrure 1 comprend une caméra 6 et un détecteur 7 connecté à la caméra 6. La caméra 6 est configurée pour capturer des images de l'extérieur du boîtier. La caméra 6 peut être fixe et dirigée selon une unique direction, ou bien orientable selon différentes directions, par rapport au boîtier. Le détecteur 7 est configuré pour détecter toute présence devant la porte d'entrée, à proximité du boîtier.

De préférence, la caméra 6 est à vision nocturne. De préférence, le détecteur 7 est également à vision nocturne.

Selon une variante, le détecteur 7 est intégré dans la caméra 6.

De préférence, le détecteur 7 est configuré pour déclencher le fonctionnement de la caméra 6 en cas de détection d'une présence. Cela permet de limiter la consommation d'énergie de la caméra 6.

De préférence, le détecteur 7 est configuré pour signaler la détection d'une présence via une alerte sonore, vibreur ...etc envoyé sur au moins un appareil du propriétaire (sur un smartphone, une montre connectée, une tablette, un ordinateur, etc) ou de l'opérateur, et quel que soit le lieu où l'on se trouve (travail, vacance, sur son canapé.....etc) à une très longue portée.

Dans la variante préférée, cette fonctionnalité est activée dès qu'une présence est détectée (temps minimum arrêté devant la porte, par exemple un temps de deux secondes) et à partir d'une certaine distance de la serrure, moins d'un mètre par exemple. La personne est par exemple vue en gros plan.

Selon le réglage choisi dans l'application par le propriétaire, la personne pourra être filmée, prise en photo...etc, et enregistrée sur au moins un appareil du gestionnaire d'accès, notamment le smartphone du propriétaire.

Le système de serrure 1 comprend en outre un module de communication comprenant un microphone 8 et un haut-parleur 9. Avantageusement, cela permet de pouvoir interagir avec un tiers voulant entrer en entrant en communication avec le gestionnaire d'accès, c'est à dire le propriétaire ou un opérateur.

De préférence, le module de communication peut être utilisé en association avec la caméra 6, permettant de voir ledit tiers situé à proximité du boîtier.

De préférence, le module de communication et ses composants (microphone 8 et un haut-parleur 9, et caméra 6 le cas échéant) fonctionne en WIFI.

On pourra communiquer avec cette personne, déverrouiller ou verrouiller la porte à distance et quel que soit le lieu où l'on se trouve à une très longue portée. Il peut être nécessaire d'avoir une connexion internet mobile pour faire fonctionner la communication.

Selon une variante, le système 1 comprend une clé de secours 10 physique et une serrure de secours 11 sur le boîtier, pour déverrouiller le verrou 2 de l'extérieur avec la clé de secours 10.

Selon une variante, le système 1 comprend un volet de masquage 12 amovible masquant la serrure de secours 11. Par exemple, le volet 12 peut être coulissé ou pivoté verticalement ou horizontalement. La serrure de secours 11 est connectée au même verrou 2 que la serrure connectée par une liaison mécanique. La serrure de secours 11 est configurée pour pouvoir déverrouiller le verrou 2 lorsque la serrure connectée est défaillante. Par exemple, l'insertion de la clé de secours 10 désaccouple le cylindre des moyens d'actuation du verrou 2 ou lesdits moyens ne sont pas accouplés au verrou 2 en situation standard. Avantageusement, la serrure de secours 11 permet de déverrouiller le verrou 2 même si la serrure connectée n'est pas fonctionnelle ou est déchargée.

Le volet de masquage 12 est équipé d'un loqueteau à pression, comprenant un ressort avec aimant. Son ouverture et fermeture se fera par pression. Derrière le volet de masquage 12 se trouve de préférence un détecteur de positionnement, ce qui permet via l'application de gestion d'accès installée sur au moins un appareil du gestionnaire d'accès, de connaître l'état du volet de masquage 12 et de recevoir une alerte en cas d'ouverture de ce dernier.

Selon une variante, le système 1 comprend un port USB 13 de recharge du système. Ce port USB 13 est connecté à l'électronique du système de serrure connectée. Ce port 13 est disposé côté extérieur, par exemple l'extérieur du bâtiment ou de l'habitation ou autre... Le port USB 13 est de préférence disposé derrière le volet de masquage 12. Avantageusement, le volet de masquage 12 permet de protéger le port USB 13 de la poussière et de l'humidité. Il en est de même pour la serrure de secours 11.

Selon une variante, le système comprend un module de sécurité anti-arrachage, configuré pour notifier une alerte via l'application de gestion d'accès. En particulier, il s'agit d'un système électronique permettant de détecter l'arrachage par exemple via une détection de séparation de deux pièces du boîtier, et transmettre une notification à cet effet au gestionnaire d'accès via l'application de gestion d'accès.

Selon une variante, le système comprend un module de sécurité anti-intrusion, configuré pour notifier une alerte à l'application de gestion d'accès. En particulier, il s'agit d'un système électronique permettant de détecter une intrusion par exemple via une détection de perçage, et transmettre une notification à ce sujet au gestionnaire d'accès via l'application de gestion d'accès.

En particulier, le système de serrure 1 en mode "verrouillé" active les systèmes de sécurité d'arrachage et de détection de vibration aussi bien sur la porte correspondante que sur le système de serrure 1 (tentative de perçage de la serrure... dégondage de la porte... etc).

En utilisation, un tiers déclenche le détecteur de mouvement 7 de la caméra 6, et une alerte est notifiée dans l'application. Si ce tiers a obstrué la caméra 6, et essaye de fracturer la porte, le système de serrure 1... une deuxième alerte spécifique est envoyée via l'application. Cette transmission de signal se fait par onde radio via le canal le plus approprié. Ainsi, une coupure électrique ou web n'empêchera pas la transmission d'alerte.

Un autre objet de l'invention concerne un kit de serrure connectée comprenant :
- un système de serrure 1 tel que décrit précédemment
- un serveur connecté au système de serrure 1 via un protocole de communication sans fil, par exemple WIFI ;
- une application de gestion d'accès configurée pour piloter le système de serrure 1 via le serveur.

Optionnellement, le kit peut aussi inclure un badge d'accès.

Selon un mode de réalisation particulier, le système de serrure 1 peut être connecté au réseau Holochain. Chaque système de serrure 1 connectée constitue un point relais du réseau Holochain.

Les architectures centralisées traditionnelles sont faciles à comprendre, à entretenir et à sécuriser, mais elles créent des points de défaillance centraux.

Le réseau Holochain transforme l'architecture des applications à l'envers : les utilisateurs sont au centre de leur présence en ligne, en charge de leur propre identité, de leurs données et de leur traitement.

Dans une application Holochain, le traitement, le stockage et la surface de sécurité sont répartis sur l'ensemble du réseau. Cela réduit les points de défaillance centraux, les goulots d'étranglement et les cibles d'attaque attrayantes.

Les deux piliers de l'intégrité des applications sont l'intégrité intrinsèque des données et la réplication / validation par les pairs.

Le réseau Holochain ne comprend de base de données mondiale unique; les données proviennent de nombreuses sources individuelles.

Chaque utilisateur d'une application participe également à la construction de l'infrastructure de l'application, en fournissant ses propres ressources de calcul et de stockage et en prenant la responsabilité de valider et de stocker une petite partie des données des autres utilisateurs.

Le tout est plus grand que la somme de ses parties de nombreux agents, jouant selon des règles simples, se combinent pour former un organisme social qui maintient sa propre santé.

Une fois le réseau Holochain fonctionnel, l'application de gestion d'accès est configurée pour réaliser une mise à jour, permettant au système de serrure 1 de fonctionner sur le réseau Holochain, présentant de nombreux avantages : plus sécurisé, plus rapide, moins énergivore, zone blanche réduite comparer aux réseaux actuels. La mise à jour se fera automatiquement entre l'application et le système de serrure 1 connectée. Un réseau privé entre le système de serrure 1 et l'application sera crée, et une clé cryptographique unique sera attribuée à ce réseau privé. L'application et le système de serrure 1 seront appairées (« peer-to-peer » en anglais). Cette clé cryptographique pourra être transmise à des tierces personnes.

Le système de serrure 1 connectée fonctionnant sur le réseau Holochain servira de relais au réseau au même titre que l'Holoport, que des appareils du type smartphone, montre, tablette, ordinateur, ce qui permettra au propriétaire de la serrure d'être rémunéré en cryptomonnaie du réseau Holochain (retour sur investissement).

Avantageusement, un outil de surveillance et de gestion de l'utilisation de la bande passante peut être installé dans le serveur afin de prioriser la bande passante du réseau privé pour supporter les applications du système de serrure connectée 1 et du foyer.

Ainsi cela permettra d'optimiser les performances du réseau (Holochain, IPFS, SafeNetwork, Storj... ) selon le choix fait du réseau et d'augmenter la rentabilité (points gagnés pour l'hébergement du réseau).

L'application de gestion d'accès du système de serrure 1 pourra, via le serveur, commander l'ouverture d'ouvrants, par exemple un portail (pour une maison ou une copropriété), ou la porte d'entrée d'un immeuble dans le cas d'un immeuble équipé de cette serrure connectée.

L'application de gestion d'accès peut être configurée pour détecter les systèmes de serrures connectées qui se trouvent dans un certain périmètre.

L'application ne permet pas de piloter directement chaque serrure, il faudra au préalable faire la demande d'accès auprès du propriétaire de cette dernière. Celui-ci aura l'option de refuser la demande, de l'accepter temporairement ou définitivement. Cette autorisation peut permettre de déverrouiller le verrou (2), ou bien simplement donner la possibilité de «sonner à la porte» pour que le propriétaire déverrouille le verrou (2).

## Revendications

1. Système de serrure (1) connectée pour porte, ledit système étant configuré sous forme de boîtier, ledit boîtier comprenant au moins :
- un moyen de déverrouillage sécurisé (4, 5) apte à être connecté à un verrou de porte (2) ;
- une caméra (6) configurée pour interagir avec un utilisateur ;
- un détecteur (7) connecté à la caméra (6) et configuré pour détecter une présence;
- un module de connexion à une application de gestion d'accès ;
- un module de communication comprenant un microphone (8) et un haut-parleur (9) configurés pour interagir avec l'utilisateur,
**caractérisé en ce que** le système de serrure (1) est connecté à un réseau Blockchain ou au réseau Holochain.

2. Système selon la revendication précédente, **caractérisé en ce qu'**un réseau privé est créé entre le système de serrure (1) et l'application sera crée, et une clé cryptographique unique est attribuée à ce réseau privé.

3. Système selon l'une des revendications précédentes, **caractérisé en ce que** le module de connexion est configuré pour être connecté à l'application de gestion d'accès via un serveur, lequel intègre le programme de fonctionnement du système de serrure (1).

4. Système selon les revendications 2 et 3, **caractérisé en ce qu'**un outil de surveillance et de gestion de l'utilisation de la bande passante est installé dans le serveur afin de prioriser la bande passante du réseau privé.

5. Système selon l'une des revendications précédentes, **caractérisé en ce que** le boîtier s'étend sous forme de cadre autour du verrou (2) et d'une poignée de porte (3) associée.

6. Système selon l'une des revendications précédentes, **caractérisé en ce que** le boîtier présente un profil plan apte à être installé contre une face extérieure de la porte.

7. Système selon l'une des revendications précédentes, **caractérisé en ce qu'**il comprend une clé de secours (10) physique et une serrure de secours (11) sur le boîtier, pour déverrouiller le verrou (2) de l'extérieur avec la clé de secours (10).

8. Système selon la revendication précédente, **caractérisé en ce qu'**il comprend un volet de masquage (12) amovible masquant la serrure de secours (10).

9. Système selon l'une des revendications précédentes, **caractérisé en ce qu'**il comprend, côté extérieur, un port USB (13) de recharge du système, de préférence derrière le volet de masquage (12).

10. Système selon l'une des revendications précédentes, **caractérisé en ce que** le moyen de déverrouillage sécurisé comprend un lecteur d'empreinte (4).

11. Système selon l'une des revendications précédentes, **caractérisé en ce que** le moyen de déverrouillage sécurisé comprend un clavier numérique (5).

12. Système selon l'une des revendications précédentes, **caractérisé en ce qu'**il est alimenté par une batterie lithium-ion rechargeable par résonance magnétique.

13. Système selon l'une des revendications précédentes, **caractérisé en ce que** le moyen de déverrouillage sécurisé comprend un contrôle de déverrouillage du verrou pilotable par un ou plusieurs protocoles de communication IoT choisis parmi le NB-IoT, Lifi, UNB (Ultra narrow Band), un protocole mixte double fréquence (twin band).

14. Système selon la revendication précédente, **caractérisé en ce qu'**au moins un moyen de déverrouillage sécurisé comprend un module de déverrouillage par badge.

15. Système selon l'une des revendications précédentes, **caractérisé en ce qu'**il comprend un module de sécurité anti-arrachage, configuré pour notifier une alerte via l'application de gestion d'accès.

16. Système selon l'une des revendications précédentes, **caractérisé en ce qu'**il comprend un module de sécurité anti-intrusion, configuré pour notifier une alerte via l'application de gestion d'accès.

17. Kit de serrure connectée comprenant :
- un système de serrure (1) connectée selon l'une des revendications 1 à 16,
- un serveur connecté au système de serrure (1) via un protocole de communication sans fil,
- une application de gestion d'accès configurée pour piloter le système de serrure (1) via le serveur.

18. Procédé de mise en œuvre d'un système de serrure (1) connectée selon l'une des revendications 1 à 16, le procédé comprend les étapes suivantes :
a) installer le système de serrure (1) sur un verrou de porte (2) ;
b) connecter le système de serrure (1) à un serveur via un protocole de communication sans fil ;
c) connecter une application de gestion d'accès au système de serrure (1) via le serveur.

19. Ensemble de serrures connectées, **caractérisé en ce qu'**il comprend plusieurs systèmes de serrure (1) connectée selon l'une des revendications 1 à 16, chaque système de serrure étant connecté à un réseau Blockchain ou Holochain.

## Patentansprüche

1. Smart-Schlosssystem (1) für Türen, wobei das System in Form von einem Gehäuse konfiguriert ist, das Gehäuse mindestens umfassend:
- ein sicheres Entriegelungsmittel (4, 5), das geeignet ist, um mit einem Türschloss (2) verbunden zu werden;
- eine Kamera (6), die zum Interagieren mit einem Benutzer konfiguriert ist;
- ein Detektor (7), der mit der Kamera (6) verbunden ist, und zum Erfassen einer Anwesenheit konfiguriert ist;
- ein Verbindungmodul mit einer Zugriffsverwaltungsanwendung;
- ein Kommunikationsmodul, umfassend ein Mikrofon (8) und einen Lautsprecher (9), die zum Interagieren mit dem Benutzer konfiguriert sind,
**dadurch gekennzeichnet, dass** das Schlosssystem (1) mit einem Blockchain-Netzwerk oder dem Holochain-Netzwerk verbunden ist.

2. System nach dem vorstehenden Anspruch,
**dadurch gekennzeichnet, dass** ein privates Netzwerk erstellt wird zwischen dem Schlosssystem (1) und der Anwendung erstellt werden wird, und ein eindeutiger kryptografischer Schlüssel diesem privaten Netzwerk zugewiesen wird.

3. System nach einem der vorstehenden Ansprüche,
**dadurch gekennzeichnet, dass** das Verbindungsmodul konfiguriert ist, um mit der Zugangsverwaltungsanwendung über einen Server verbunden zu werden, der das Betriebsprogramm des Schlosssystems (1) integriert.

4. System nach den Ansprüchen 2 und 3, **dadurch gekennzeichnet, dass** eine Einrichtung für die Überwachung und Verwaltung der Bandbreitennutzung in dem Server installiert ist, um die Bandbreite des privaten Netzwerks zu priorisieren.

5. System nach einem der vorstehenden Ansprüche,
**dadurch gekennzeichnet, dass** sich das Gehäuse in Form eines Rahmens um die Verriegelung (2) und einen zugehörigen Türgriff (3) erstreckt.

6. System nach einem der vorstehenden Ansprüche,
**dadurch gekennzeichnet, dass** das Gehäuse ein flaches Profil aufweist, das geeignet ist, an einer Außenfläche der Tür installiert zu werden.

7. System nach einem der vorstehenden Ansprüche,
**dadurch gekennzeichnet, dass** es einen physischen Notfallschlüssel (10) und ein Notfallschloss (11) auf dem Gehäuse zum Entriegeln der Verriegelung (2) von außen mit dem Notfallschlüssel (10) umfasst.

8. System nach dem vorstehenden Anspruch,
**dadurch gekennzeichnet, dass** es eine abnehmbare Abdeckklappe (12), die das Notfallschloss (10) verdeckt, umfasst.

9. System nach einem der vorstehenden Ansprüche,
**dadurch gekennzeichnet, dass** es auf der Außenseite einen USB-Anschluss (13) zum Wiederaufladen des Systems, vorzugsweise hinter der Abdeckklappe (12), umfasst.

10. System nach einem der vorstehenden Ansprüche,
**dadurch gekennzeichnet, dass** das sichere Entriegelungsmittel einen Fingerabdruckleser (4) umfasst.

11. System nach einem der vorstehenden Ansprüche,
**dadurch gekennzeichnet, dass** das sichere Entriegelungsmittel ein numerisches Tastenfeld (5) umfasst.

12. System nach einem der vorstehenden Ansprüche,
**dadurch gekennzeichnet, dass** es durch eine wiederaufladbare Lithium-Ionen-Batterie durch Magnetresonanz gespeist wird.

13. System nach einem der vorstehenden Ansprüche,
**dadurch gekennzeichnet, dass** das sichere Entriegelungsmittel eine Entriegelungssteuerung für die Verriegelung, die über ein oder mehrere loT-Kommunikationsprotokolle steuerbar ist, ausgewählt aus NB-IoT, LiFi, UNB (ultra narrow band), einem gemischten Doppelfrequenzprotokoll (twin band), umfasst.

14. System nach dem vorstehenden Anspruch,
**dadurch gekennzeichnet, dass** mindestens ein sicheres Entriegelungsmittel ein Entriegelungsmodul durch Ausweis umfasst.

15. System nach einem der vorstehenden Ansprüche,
**dadurch gekennzeichnet, dass** es ein Sicherheitsmodul gegen Herausreißen, das zum Übermitteln eines Alarms über die Zugriffsverwaltungsanwendung konfiguriert ist, umfasst.

16. System nach einem der vorstehenden Ansprüche,
**dadurch gekennzeichnet, dass** es ein Sicherheitsmodul gegen Eindringen, das zum Übermitteln eines Alarms über die Zugriffsverwaltungsanwendung konfiguriert ist, umfasst.

17. Smart-Schloss-Set, umfassend:
- ein Smart-Schlosssystem (1) nach einem der Ansprüche 1 bis 16,
- einen Server, der mit dem Schlosssystem (1) über ein drahtloses Kommunikationsprotokoll verbunden ist,
- eine Zugriffsverwaltungsanwendung, die zum Steuern des Schlosssystems (1) über den Server konfiguriert ist.

18. Verfahren zum Implementieren eines Smart-Schlosssystems (1) nach einem der Ansprüche 1 bis 16, wobei das Verfahren die folgenden Schritte umfasst:
a) Installieren des Schlosssystems (1) an einer Türverriegelung (2);
b) Verbinden des Schlosssystems (1) mit einem Server über ein drahtloses Kommunikationsprotokoll;
c) Verbinden einer Zutrittsverwaltungsanwendung mit dem Schlosssystem (1) über den Server.

19. Baugruppe für Smart-Schlosssysteme, **dadurch gekennzeichnet, dass** sie mehrere Smart-Schlosssysteme (1) nach einem der Ansprüche 1 bis 16 umfasst, wobei jedes Schlosssystem mit einem Blockchain- oder Holochain-Netzwerk verbunden ist.

## Claims

1. Connected-lock system (1) for a door, said system being configured as a housing, said housing comprising at least:
- a secure unlocking means (4, 5) capable of being connected to a door locking bar (2);
- a camera (6) configured to interact with a user;
- a detector (7) connected to the camera (6) and configured to detect a presence;
- a module for connection to an access management application;
- a communication module comprising a microphone (8) and a loudspeaker (9) which are configured to interact with the user,
**characterized in that** the lock system (1) is connected to a blockchain network or to the holochain network.

2. System according to the preceding claim, **characterized in that** a private network is created between the lock system (1) and the application will be creates, and a unique cryptographic key is assigned to this private network.

3. System according to either of the preceding claims, **characterized in that** the connection module is configured to be connected to the access management application via a server that incorporates the operating program of the lock system (1).

4. System according to claims 2 and 3, **characterized in that** a bandwidth usage monitoring and management tool is installed in the server in order to prioritize the bandwidth of the private network.

5. System according to any of the preceding claims, **characterized in that** the housing extends as a frame around the locking bar (2) and an associated door handle (3).

6. System according to any of the preceding claims, **characterized in that** the housing has a flat profile capable of being installed against an outer face of the door.

7. System according to any of the preceding claims, **characterized in that** it comprises a physical emergency key (10) and an emergency lock (11) on the housing to unlock the locking bar (2) from the outside with the emergency key (10).

8. System according to the preceding claim, **characterized in that** it comprises a removable masking flap (12) that masks the emergency lock (10).

9. System according to any of the preceding claims, **characterized in that** it comprises, on the outer side, a USB port (13) for recharging the system, preferably behind the masking flap (12).

10. System according to any of the preceding claims, **characterized in that** the secure unlocking means comprises a fingerprint reader (4).

11. System according to any of the preceding claims, **characterized in that** the secure unlocking means comprises a numeric keypad (5).

12. System according to any of the preceding claims, **characterized in that** it is powered by a lithium-ion battery that can be recharged using magnetic resonance.

13. System according to any of the preceding claims, **characterized in that** the secure unlocking means comprises a control element for unlocking the locking bar, which control element can be controlled by one or more IoT communication protocols chosen from NB-IoT, Li-Fi, UNB (ultra narrowband), and a mixed dual frequency (twin band) protocol.

14. System according to the preceding claim, **characterized in that** at least one secure unlocking means comprises a module for unlocking using a badge.

15. System according to any of the preceding claims, **characterized in that** it comprises an anti-removal security module that is configured to provide an alert notification via the access management application.

16. System according to any of the preceding claims, **characterized in that** it comprises an anti-break-in security module that is configured to provide an alert notification via the access management application.

17. Connected-lock kit comprising:
- a connected-lock system (1) according to any of claims 1 to 16,
- a server connected to the lock system (1) via a wireless communication protocol,
- an access management application configured to control the lock system (1) via the server.

18. Method for implementing a connected-lock system (1) according to any of claims 1 to 16, the method comprising the following steps:
a) installing the lock system (1) on a door locking bar (2);
b) connecting the lock system (1) to a server via a wireless communication protocol;
c) connecting an access management application to the lock system (1) via the server.

19. Set of connected locks, **characterized in that** it comprises a plurality of connected-lock systems (1) according to any of claims 1 to 16, each lock system being connected to a blockchain network or holochain network.
